# EUROPEAN PATENT APPLICATION

(11) **EP 4 847 546 A1**
(43) Date of publication of application: **02.12.2026**
(21) Application number: 24920082.5
(22) Date of filing: 25.12.2024
(51) Int. Cl.: C08G 63/189, C08J 5/18

(54) **POLYETHYLENE NAPHTHALATE RESIN COMPOSITION FOR OPTICAL MEMBER AND UNIAXIALLY STRETCHED FILM**

(30) Priority: 22.01.2024 JP 2024007267
(71) Applicant: TEIJIN LIMITED, Kita-ku, Osaka-shi, Osaka 530-0005 (JP)
(72) Inventor: MURAKAMI, Takuya, Osaka-shi, Osaka 530-0005 (JP); OOKAWA, Naoki, Osaka-shi, Osaka 530-0005 (JP); TOGASAKI, Junichi, Osaka-shi, Osaka 530-0005 (JP)
(74) Representative: Kraus & Lederer PartGmbB
(86) International application number: PCT/JP2024/045818
(87) International publication number: WO 2025/158859

(57) **Abstract**

The invention provides a polyethylene naphthalate resin composition that can be used for an optical member such as an optical film. The polyethylene naphthalate resin composition for an optical member of the invention contains (A) polyethylene naphthalate and (B) a phosphorus compound represented by the following formula (I) or (II) or a salt thereof (in the formula, R₁ represents an alkyl group having 1 to 12 carbon atoms, an aryl group having 6 to 12 carbon atoms, or a benzyl group, R₂ and R₃ each represent an alkyl group having 1 to 12 carbon atoms, an aryl group having 6 to 12 carbon atoms, a benzyl group, an ethylene glycol group, or a hydrogen atom, and R₁ and R₂ may be bonded to each other to form a ring).

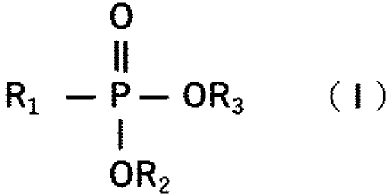

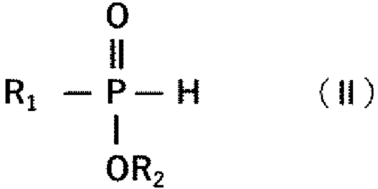

## Description

### Technical Field

The present invention relates to a polyethylene naphthalate resin composition for an optical member, which is capable of exhibiting a high refractive index in the stretching direction when stretched, and a uniaxially stretched film formed from the resin composition.

### Background Art

Polyethylene naphthalate resins are widely known to be industrially highly valuable because they are excellent in mechanical properties such as strength, elongation, Young's modulus, and elastic recovery rate, physical properties such as heat resistance and dimensional stability, and chemical properties such as chemical resistance and water resistance, and are inexpensive. They are widely used in, for example, fibers, resin molded articles, and films.

However, since polyethylene naphthalate resins have rigid molecular chains, there has been a problem in that they have low crystallinity as compared with polyethylene terephthalate resins (PET) and thus have low moldability (particularly blow moldability as in PET bottles), making it difficult to mold them into large bottles like a type-20 fire extinguisher. In order to improve such crystallinity, it has been proposed to add a specific phosphorus compound (see, e.g., PTL 1 and PTL 2).

### Citation List

### Patent Literature

PTL 1: WO2015/125846 (Patent No. 6181847)
PTL 2:JP2008-247932A (Patent No. 5217052)

### Summary of Invention

### Technical Problem

In PTLs 1 and 2, it is described that a polyethylene naphthalate resin composition having added thereto the above phosphorus compound has improved blow moldability, and that the resulting molded article is excellent in physical properties such as weather resistance. However, in PTLs 1 and 2, optical characteristics such as a refractive index of such a resin composition have not been studied, and therefore, it has been unclear whether such a resin composition can be applied to an optical member.

In contrast, according to the study by the present inventors, it has been found that a polyethylene naphthalate resin composition having added thereto a specific phosphorus compound exhibits a high refractive index in the stretching direction when a film of the resin composition is stretched, thus can be used for an optical member such as an optical film. An object of the invention is to provide a polyethylene naphthalate resin composition that can be used for an optical member such as an optical film.

### Solution to Problem

The present inventors have found that the above problems can be solved by the invention having the following aspects.

### <Aspect 1>

A polyethylene naphthalate resin composition for an optical member, containing:
(A) polyethylene naphthalate; and
(B) a phosphorus compound represented by the following formula (I) or (II) or a salt thereof: 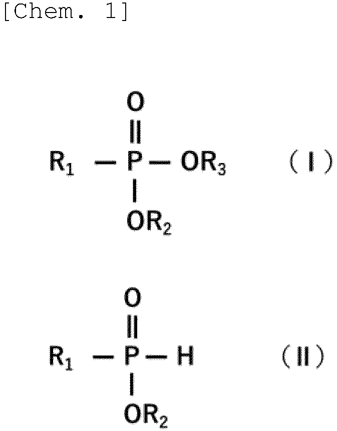 in the formulae, R₁ represents an alkyl group having 1 to 12 carbon atoms, an aryl group having 6 to 12 carbon atoms, or a benzyl group, R₂ and R₃ each represent an alkyl group having 1 to 12 carbon atoms, an aryl group having 6 to 12 carbon atoms, a benzyl group, an ethylene glycol group, or a hydrogen atom, and R₁ and R₂ may be bonded to each other to form a ring.

### <Aspect 2>

The resin composition according to the aspect 1, in which the amount of the phosphorus compound or salt thereof added is 0.1 to 10000 ppm.

### <Aspect 3>

The resin composition according to the aspect 1, in which the phosphorus compound or salt thereof is phenylphosphonic acid or a salt thereof, or 9,10-dihydro-9-oxa-10-phosphaphenanthrene-10-oxide or a salt thereof.

### <Aspect 4>

The resin composition according to the aspect 1, in which
the salt is at least one selected from a manganese salt, a cobalt salt, and a zinc salt, and/or
the resin composition contains at least one selected from a manganese ion, a cobalt ion, and a zinc ion.

### <Aspect 5>

The resin composition according to the aspect 1, in which a sheet obtained by stretching a sheet of the resin composition at a uniaxial maximum draw ratio has a higher refractive index in the stretching direction than a sheet obtained by stretching, under the same conditions at a uniaxial maximum draw ratio, a sheet of a resin composition to which the phosphorus compound or salt thereof is not added.

### <Aspect 6>

A uniaxially stretched film including the resin composition according to the aspect 1.

### <Aspect 7>

The uniaxially stretched film according to the aspect 5, having a refractive index of 1.80 to 1.95 in the stretching direction.

### <Aspect 8>

The uniaxially stretched film according to the aspect 5, having a degree of orientation of 94.5% or more and a crystal size of 6 nm or less.

### Advantageous Effects of Invention

The polyethylene naphthalate resin composition of the invention exhibits, when stretched, a high refractive index in the stretching direction, and is useful for optical applications including optical films and the like. In addition, since the birefringence also improves, it can be suitably used for applications including reflective polarizers, polarizing films, and the like.

### Description of Embodiments

The polyethylene naphthalate resin composition of the invention (hereinafter sometimes referred to as "PEN composition") is a composition containing (A) polyethylene naphthalate and (B) a phosphorus compound having a specific chemical structural formula or a salt thereof.

### (A) Polyethylene Naphthalate

The polyethylene naphthalate in the PEN composition of the invention is a polymer using 2,6-naphthalenedicarboxylic acid as the dicarboxylic acid component and ethylene glycol as the diol component, as represented by the following formula.

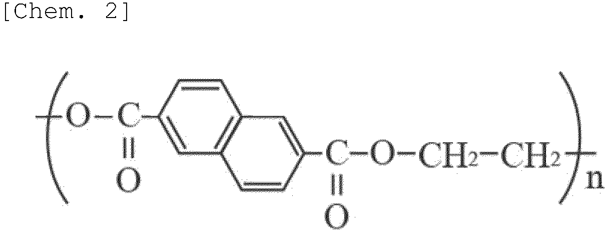

However, as long as the effects of the invention are not impaired, other dicarboxylic acids and other diol components may be copolymerized, and, in addition, the PEN composition of the invention may also contain small amounts of polyesters composed of other dicarboxylic acids and other diol components. The amounts of dicarboxylic acid and diol components that can be copolymerized are each independently 10 mol% or less based on the naphthalene dicarboxylic acid component. In addition, the amount of polyesters composed of the dicarboxylic acid and other diol components that can be present is 20% by weight or less based on the weight of the PEN composition of the invention.

Examples of other dicarboxylic acid components include aromatic dicarboxylic acids, aliphatic dicarboxylic acids, alicyclic dicarboxylic acids, and ester-forming derivatives thereof. Specific examples of aromatic dicarboxylic acids include phthalic acid, isophthalic acid, terephthalic acid, 2,7-naphthalenedicarboxylic acid, 1,4-naphthalenedicarboxylic acid, 1,5-naphthalenedicarboxylic acid, 1,6-naphthalenedicarboxylic acid, 2,5-naphthalenedicarboxylic acid, 4,4'-diphenyldicarboxylic acid, 4,4'-diphenoxyethanedicarboxylic acid, 4,4'-diphenylsulfonedicarboxylic acid, 4,4'-diphenylmethanedicarboxylic acid, 4,4'-diphenylethanedicarboxylic acid, 4,4'-diphenylpropanedicarboxylic acid, 4,4'-diphenylketonedicarboxylic acid, diphenyl ether-4,4'-dicarboxylic acid, diphenylthioether-4,4'-dicarboxylic acid, tetralindicarboxylic acid, and 6,6'-(alkylenedioxy)di-2-naphthoic acid. Alternatively, in diphenyldicarboxylic acids and the like, the substituent position is not limited to 4,4'-, and aromatic dicarboxylic acids substituted at positions such as 2,4'-, 3,4'-, 2,5'-, 2,2'-, and 3,3' may also be used.

In addition, an ester-forming derivative of an aromatic dicarboxylic acid refers to a lower dialkyl ester having 1 to 6 carbon atoms, a lower diaryl ester having 6 to 10 carbon atoms, or a diacid halide. More specifically, examples thereof include dimethyl esters, diethyl esters, di-n-propyl esters, di-iso-propyl esters, di-n-butyl esters, di-sec-butyl esters, di-tert-butyl esters, dipentyl esters, dihexyl esters, dihexyl esters, dioctyl esters, dinonyl esters, didecyl esters, diphenyl esters, dibenzyl esters, and dinaphthyl esters of the dicarboxylic acid described above, as well as aromatic dicarboxylic acid difluorides, aromatic dicarboxylic acid dichlorides, aromatic dicarboxylic acid dibromides, and aromatic dicarboxylic acid diiodides. In such dialkyl esters having 1 to 6 carbon atoms and diaryl esters having 6 to 10 carbon atoms, one, or two or more of the hydrogen atoms may be further substituted with a halogen atom, an alkylcarbonyl group such as an alkyl ether group, an aryl ether group, an alkyl ester group, an aryl ester group, or an acetyl group, or an arylcarbonyl group such as a benzoyl group.

Specific examples of other aliphatic dicarboxylic acid components and alicyclic dicarboxylic acid components include aliphatic dicarboxylic acids, such as oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, heptadecanedioic acid, octadecanedioic acid, nonadecanedioic acid, eicosanedioic acid, docosanedioic acid, fumaric acid, maleic acid, and itaconic acid, and alicyclic dicarboxylic acids, such as 1,2-cyclohexanedicarboxylic acid, 1,3-cyclohexanedicarboxylic acid, 1,4-cyclohexanedicarboxylic acid, perhydronaphthalenedicarboxylic acid (decalindicarboxylic acid), dimer acid (a reaction product obtained by the Diels-Alder reaction between 9,11-conjugated linoleic acid and non-conjugated linoleic acid, etc.), cyclobutanedicarboxylic acid, tetramethylcyclobutanedicarboxylic acid, tricyclodecanedicarboxylic acid, norbornanedicarboxylic acid, and adamantanedicarboxylic acid.

The other dicarboxylic acid components may be anhydrides or ester-forming derivatives such as those described above. It is more preferable to use one or two of these dicarboxylic acid components. The copolymerization ratio of these dicarboxylic acid components with respect to the 2,6-naphthalenedicarboxylic acid component is preferably 0 to 10 mol%, and more preferably 2 to 8 mol%. Further, a compound having three or more carboxyl groups in the molecule, such as trimellitic acid, trimesic acid, pyromellitic acid, gallic acid, or tricarballylic acid, may be copolymerized within a range of 1 to 5 mol%.

Further, in part of the ethylene glycol component constituting the polyethylene naphthalate in the PEN composition of the invention, a diol component other than the ethylene glycol component may be copolymerized. Diol components having 2 to 20 carbon atoms are preferable, and specific examples thereof include 1,2-propylene glycol, trimethylene glycol, tetramethylene glycol, pentamethylene glycol, hexamethylene glycol, heptamethylene glycol, octamethylene glycol, nonamethylene glycol, decamethylene glycol, undecamethylene glycol, dodecamethylene glycol, tridecamethylene glycol, tetradecamethylene glycol, pentadecamethylene glycol, hexadecamethylene glycol, neopentyl glycol, diethylene glycol, triethylene glycol, tetraethylene glycol, dipropylene glycol, tripropylene glycol, tetrapentylene glycol, 2,2-diethyl-1,3-propanediol, 2-ethyl-2-butyl-1,3-propanediol, 2,2,4-trimethyl-1,3-pentanediol, 1,1-dihydroxycyclohexane, 1,2-dihydroxycyclohexane, 1,3-dihydroxycyclohexane, 1,4-dihydroxycyclohexane, 1,1-cyclohexanedimethanol, 1,2-cyclohexanedimethanol, 1,3-cyclohexanedimethanol, 1,4-cyclohexanedimethanol, 2,2,4,4-tetramethylcyclobutane-1,3-diol, p-bis(2-hydroxyethoxy)benzene, p-bis(3-hydroxypropoxy)benzene, 4,4'-bis(2-hydroxyethoxy)biphenyl, 4,4'-bis(3-hydroxypropoxy)biphenyl, 2,2-bis(4-β-hydroxyethoxyphenyl)propane, 2,2-bis(4-γ-hydroxypropoxyphenyl)propane, 2,2-bis(4-ω-hydroxyethoxyethoxyphenyl)propane, bis(4-β-hydroxyethoxyphenyl)sulfone, bis(4-γ-hydroxypropoxyphenyl)sulfone, bis(4-ω-hydroxyethoxyethoxyphenyl)sulfone, 2,2-bis(4-β-hydroxyethoxycycloalkyl)propane, 2,2-bis(4-γ-hydroxypropoxycycloalkyl)propane, bis(4-β-hydroxyethoxycycloalkyl)sulfone, bis(4-γ-hydroxypropoxycycloalkyl)sulfone, 2,2,4,4-tetramethyl-1,3-cyclobutanediol, adamantanediol, spiroglycol, and tricyclo[5.2.1.0^{2,6}]decanedimethanol. The diol component other than the above two is more preferably one or two of these compounds. Further, a compound having three or more hydroxyl groups in the molecule, such as pentaerythritol or tetrakis(hydroxymethyl)methane, may be copolymerized in a proportion of 1 to 3 mol% with the aromatic dicarboxylic acid component taken as 100%.

Further, in the invention, a compound component other than the above dicarboxylic acid components, diol components, compounds having three or more carboxyl groups in the molecule, and compounds having three or more hydroxy groups in the molecule, that is, a hydroxycarboxylic acid, may be copolymerized as necessary. Examples of hydroxycarboxylic acids include glycolic acid, lactic acid, glyceric acid, 2-hydroxybutyric acid, 3-hydroxybutyric acid, 4-hydroxybutyric acid, 2-hydroxyisobutyric acid, 2-hydroxy-2-methylbutyric acid, 2-hydroxyvaleric acid, 3-hydroxyvaleric acid, 4-hydroxyvaleric acid, 5-hydroxyvaleric acid, 6-hydroxycaproic acid, 10-hydroxystearic acid, malic acid, tartaric acid, citramalic acid, citric acid, isocitric acid, leucic acid, mevalonic acid, pantoic acid, ricinoleic acid, ricinelaidic acid, cerebronic acid, quinic acid, shikimic acid, 4-(β-hydroxy) ethoxybenzoic acid, β-propiolactone, β-butyrolactone, γ-butyrolactone, δ-valerolactone, and ε-caprolactone. In the case where a hydroxycarboxylic acid is copolymerized, the proportion thereof is preferably within a range of 10 mol% or less with respect to the 2,6-naphthalenedicarboxylic acid component. In addition, in the PEN composition of the invention, monocarboxylic acids and monoalcohols may be copolymerized in small amounts.

The polyethylene naphthalate in the PEN composition of the invention can be preferably obtained by a production method in which an ester-forming derivative of a dicarboxylic acid component as described above and a glycol such as ethylene glycol are subjected to a transesterification reaction, followed by polycondensation, or by a production method in which a dicarboxylic acid and a glycol such as ethylene glycol are subjected to an esterification reaction, followed by polycondensation.

### (B) Phosphorus Compound or Salt Thereof

The PEN composition of the invention contains a phosphorus compound represented by the following formula (I) or (II) or a salt thereof.

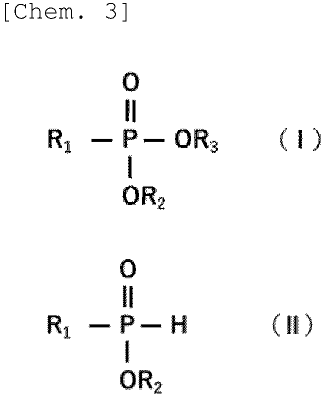

In the above formula (I) or (II), R₁ represents an alkyl group having 1 to 12 carbon atoms, an aryl group having 6 to 12 carbon atoms, or a benzyl group, R₂ and R₃ each represent an alkyl group having 1 to 12 carbon atoms, an aryl group having 6 to 12 carbon atoms, a benzyl group, an ethylene glycol group, or a hydrogen atom, and R₁ and R₂ may be bonded to each other to form a ring.

The amount of the phosphorus compound or salt thereof added is preferably 0.1 to 10000 ppm. In addition, the amount of the phosphorus compound or salt thereof added may be 0.1 ppm or more, 1 ppm or more, 5 ppm or more, 10 ppm or more, 50 ppm or more, or 100 ppm or more, and may be 10000 ppm or less, 8000 ppm or less, 6000 ppm or less, 4000 ppm or less, 3000 ppm or less, or 2000 ppm or less.

This phosphorus compound or salt thereof acts as a crystallization nucleating agent in the PEN composition, and is preferably added during the transesterification reaction. The addition of the phosphorus compound or salt thereof not only deactivates the transesterification catalyst, but also can improve the crystallinity of the PEN composition and improve the refractive index of a film formed from this composition during stretching. On the other hand, when the amount of the phosphorus compound added is too large, phenomena such as the aggregation of the phosphorus compound may occur in the PEN composition of the invention. As a result, the transparency of the PEN composition is lost, which is undesirable.

The compound represented by the above formula (I) or (II) is an organic phosphonic acid or a phosphate ester compound thereof. More specifically, examples thereof include alkylphosphonic acids, arylphosphonic acids, and benzylphosphonic acids, as well as phosphate ester compounds thereof. Specific examples of alkylphosphonic acids include methylphosphonic acid, ethylphosphonic acid, n-propylphosphonic acid, tert-butylphosphonic acid, n-pentylphosphonic acid, iso-pentylphosphonic acid, n-hexylphosphonic acid, iso-hexylphosphonic acid, heptylphosphonic acid, octylphosphonic acid, nonylphosphonic acid, decylphosphonic acid, undecylphosphonic acid, dodecylphosphonic acid, cyclohexylphosphonic acid, cyclooctylphosphonic acid, and cyclodecane phosphonic acid. Specific examples of arylphosphonic acids include phenylphosphonic acid, methylphenylphosphonic acid, dimethylphenylphosphonic acid, trimethylphenylphosphonic acid, tetramethylphenylphosphonic acid, pentamethylphenylphosphonic acid, ethylphenylphosphonic acid, methylethylphenylphosphonic acid, diethylphenylphosphonic acid, monomethyldiethylphenylphosphonic acid, dimethyldiethylphenylphosphonic acid, triethylphenylphosphonic acid, propylphenylphosphonic acid, methylpropylphenylphosphonic acid, dimethylpropylphenylphosphonic acid, ethylpropylphenylphosphonic acid, dipropylphenylphosphonic acid, butylphenylphosphonic acid, methylbutylphenylphosphonic acid, ethylbutylphenylphosphonic acid, dimethylbutylphenylphosphonic acid, pentylphenylphosphonic acid, methylpentylphenylphosphonic acid, hexylphenylphosphonic acid, naphthylphosphonic acid, methylnaphthylphosphonic acid, dimethylnaphthylphosphonic acid, ethylnaphthylphosphonic acid, and further benzylphosphonic acid. Needless to say, of the group of these compounds, compounds in which a plurality of aliphatic groups are bonded to a phenyl group or a naphthyl group fall under the phosphorus compounds represented by the general formula (I) or (II) of the invention regardless of the substitution positions of the aliphatic groups in the phenyl group or the naphthyl group.

In addition, specific examples of phosphate ester compounds of alkylphosphonic acids, arylphosphonic acids, and benzylphosphonic acids include dimethyl esters, diethyl esters, dipropyl esters, di-n-butyl esters, di-tert-butyl esters, di-n-pentyl esters, di-iso-pentyl esters, dihexyl esters, di-iso-hexyl esters, diheptyl esters, dioctyl esters, dinonyl esters, didecyl esters, diundecyl esters, didodecyl esters, dicyclohexyl esters, dicyclooctyl esters, dicyclodecane esters, diethylene glycol esters, methyl ethyl esters, methyl propyl esters, methyl-n-butyl esters, methyl-tert-butyl esters, methyl-n-pentyl esters, methyl-iso-pentyl esters, methyl hexyl esters, methyl-iso-hexyl esters, methyl heptyl esters, methyl octyl esters, methyl nonyl esters, methyl decyl esters, methyl undecyl esters, methyl dodecyl esters, methyl cyclohexyl esters, methyl cyclooctyl esters, methyl cyclodecane esters, ethyl propyl esters, ethyl-n-butyl esters, ethyl-tert-butyl esters, ethyl-n-pentyl esters, ethyl-iso-pentyl esters, ethyl hexyl esters, ethyl-iso-hexyl esters, ethyl heptyl esters, ethyl octyl esters, ethyl nonyl esters, ethyl decyl esters, ethyl undecyl esters, ethyl dodecyl esters, ethyl cyclohexyl esters, ethyl cyclooctyl esters, ethyl cyclodecane esters, propyl-n-butyl esters, propyl-tert-butyl esters, propyl-n-pentyl esters, propyl-iso-pentyl esters, propyl hexyl esters, propyl-iso-hexyl esters, propyl heptyl esters, propyl octyl esters, propyl nonyl esters, propyl decyl esters, propyl undecyl esters, propyl dodecyl esters, propyl cyclohexyl esters, propyl cyclooctyl esters, propyl cyclodecane esters, n-butyl-tert-butyl esters, n-butyl n-pentyl esters, n-butyl-iso-pentyl esters, n-butyl hexyl esters, n-butyl-iso-hexyl esters, n-butyl heptyl esters, n-butyl octyl esters, n-butyl nonyl esters, n-butyl decyl esters, n-butyl undecyl esters, n-butyl dodecyl esters, n-butyl cyclohexyl esters, n-butyl cyclooctyl esters, n-butyl cyclodecane esters, tert-butyl n-pentyl esters, tert-butyl-iso-pentyl esters, tert-butyl hexyl esters, tert-butyl-iso-hexyl esters, tert-butyl heptyl esters, tert-butyl octyl esters, tert-butyl nonyl esters, tert-butyl decyl esters, tert-butyl undecyl esters, tert-butyl dodecyl esters, tert-butyl cyclohexyl esters, tert-butyl cyclooctyl esters, tert-butyl cyclodecane esters, n-pentyl-iso-pentyl esters, n-pentyl hexyl esters, n-pentyl-iso-hexyl esters, n-pentyl heptyl esters, n-pentyl octyl esters, n-pentyl nonyl esters, n-pentyl decyl esters, n-pentyl undecyl esters, n-pentyl dodecyl esters, n-pentyl cyclohexyl esters, n-pentyl cyclooctyl esters, n-pentyl cyclodecane esters, iso-pentyl hexyl esters, iso-pentyl-iso-hexyl esters, iso-pentyl heptyl esters, iso-pentyl octyl esters, iso-pentyl nonyl esters, iso-pentyl decyl esters, iso-pentyl undecyl esters, iso-pentyl dodecyl esters, iso-pentyl cyclohexyl esters, iso-pentyl cyclooctyl esters, iso-pentyl cyclodecane esters, hexyl-iso-hexyl esters, hexyl heptyl esters, hexyl octyl esters, hexyl nonyl esters, hexyl decyl esters, hexyl undecyl esters, hexyl dodecyl esters, hexyl cyclohexyl esters, hexyl cyclooctyl esters, hexyl cyclodecane esters, iso-hexyl heptyl esters, iso-hexyl octyl esters, iso-hexyl nonyl esters, iso-hexyl decyl esters, iso-hexyl undecyl esters, iso-hexyl dodecyl esters, iso-hexyl cyclohexyl esters, iso-hexyl cyclooctyl esters, iso-hexyl cyclodecane esters, heptyl octyl esters, heptyl nonyl esters, heptyl decyl esters, heptyl undecyl esters, heptyl dodecyl esters, heptyl cyclohexyl esters, heptyl cyclooctyl esters, heptyl cyclodecane esters, octyl nonyl ester, octyl decyl esters, octyl undecyl esters, octyl dodecyl esters, octyl cyclohexyl esters, octyl cyclooctyl esters, octyl cyclodecane esters, nonyl decyl esters, nonyl undecyl esters, nonyl dodecyl esters, nonyl cyclohexyl esters, nonyl cyclooctyl esters, nonyl cyclodecane esters, decyl undecyl esters, decyl dodecyl esters, decyl cyclohexyl esters, decyl cyclooctyl esters, decyl cyclodecane esters, undecyl dodecyl esters, undecyl cyclohexyl esters, undecyl cyclooctyl esters, undecyl cyclodecane esters, dodecyl cyclohexyl esters, dodecyl cyclooctyl esters, dodecyl cyclodecane esters, cyclohexyl cyclooctyl esters, cyclohexyl cyclodecane esters, cyclooctyl cyclodecane esters, diphenyl esters, dinaphthyl esters, dibenzyl esters, phenylnaphthyl esters, phenylbenzyl esters, and naphthylbenzyl esters of the alkylphosphonic acids, arylphosphonic acids, and benzylphosphonic acids described above.

The compound represented by the above formula (II) is an organic phosphinic acid or a phosphate ester compound thereof, and specific examples thereof include alkylphosphinic acids, arylphosphinic acids, and benzylphosphinic acids, as well as phosphate ester compounds thereof. Examples of alkylphosphinic acids, arylphosphinic acids, and benzylphosphinic acids include compounds in which the phosphonic acid moiety of the phosphonic acid compounds specifically described above is replaced with phosphinic acid. In addition, specific examples of phosphate ester compounds of alkylphosphinic acids, arylphosphinic acids, and benzylphosphinic acids include methyl esters, ethyl esters, n-propyl esters, n-butyl esters, tert-butyl esters, n-pentyl esters, iso-pentyl esters, n-hexyl esters, iso-hexyl esters, heptyl esters, octyl esters, nonyl esters, decyl esters, undecyl esters, dodecyl esters, cyclohexyl esters, cyclooctyl esters, cyclodecane esters, ethylene glycol esters, phenyl esters, naphthyl esters, and benzyl esters of the alkylphosphinic acids, arylphosphinic acids, and benzylphosphinic acids described above. In addition, other examples include 9,10-dihydro-9-oxa-10-phosphaphenanthrene-10-oxide.

The compound represented by the above formula (I) or (II) may be a salt thereof. The salt is preferably at least one selected from a manganese salt, a cobalt salt, and a zinc salt.

In addition, the PEN composition of the invention preferably contains at least one selected from a manganese ion, a cobalt ion, and a zinc ion. These manganese ion, cobalt ion, and zinc ion are obtained by adding compounds containing these ions, such as manganese acetate tetrahydrate, cobalt acetate tetrahydrate, and zinc acetate dihydrate.

These manganese ion, cobalt ion, and zinc ion function as transesterification reaction catalysts of polyethylene naphthalate. The content of at least one selected from these manganese ion, cobalt ion, and zinc ion is preferably 10 to 50 mmol% per mole of the dicarboxylic acid component constituting the polyethylene naphthalate. When the content is less than 10 mmol%, the effect is not exhibited, while the hue becomes gray, leading to the deterioration of the hue when the content is more than 50 mmol%. The content is more preferably 15 to 45 mmol%, still more preferably 18 to 40 mmol%, and particularly preferably 20 to 35 mmol%.

A sheet formed from the PEN composition of the invention is characterized in that when the sheet is stretched at its uniaxial maximum draw ratio, the sheet has a higher refractive index in the stretching direction than a sheet obtained by stretching a sheet formed from a resin composition not containing the phosphorus compound or salt thereof under the same conditions at its uniaxial maximum draw ratio. Here, the uniaxial maximum draw ratio means the ratio just before the sheet breaks during uniaxial stretching.

Therefore, the invention also relates to a uniaxially stretched film formed by uniaxially stretching the PEN composition described above. The uniaxially stretched film of the invention preferably has a refractive index of 1.80 to 1.95, more preferably 1.85 to 1.95, in the stretching direction.

### Examples

Hereinafter, the invention will be described in detail with reference to examples. However, within the gist thereof, the invention is not limited to the following examples. Incidentally, the film-forming conditions, stretching conditions, and various physical properties of the obtained polyethylene naphthalate resin composition films were measured by the following methods. Incidentally, the term "part" hereinafter refers to "part by weight" unless otherwise specified.

### (a) Film-Forming Conditions

Chips of a PEN composition were dried at 160°C for 5 hours prior to film formation to remove moisture. At a film-forming temperature of 285 to 300°C, film formation was performed while adjusting the conditions such that the resulting sheet thickness was about 200 µm, thereby giving an unstretched sheet.

### (b) Stretching Conditions

Stretching was performed at a stretching temperature of 140°C and a stretching speed of 2.1 m/min. The draw ratio was determined as follows. The sheet was stretched until just before breakage, and the draw ratio was calculated from the elongation rate of the marks that had been attached at 1-cm intervals prior to stretching.

### (c) Refractive Index

The refractive index of a stretched film was measured at a laser wavelength of 633 nm using a prism coupler Model 2010 manufactured by Metricon Corporation.

### (d) Intrinsic Viscosity

A PEN composition was dissolved using a mixed solvent of phenol/tetrachloroethane (weight ratio 60/40) to prepare a solution having a polymer concentration of 1.2 g/dL, and measurement was performed at 35°C to determine the intrinsic viscosity.

### (e) Glass Transition Temperature (Tg)

Tg was measured using a differential scanning calorimeter (DSC) while raising the temperature at a heating rate of 20°C/min. About 10 mg of a measurement sample was weighed in an aluminum pan (manufactured by TA Instruments) and measured under a nitrogen atmosphere.

### (f) Degree of Orientation

A film after stretching was subjected to WAXD (wide-angle X-ray diffraction) measurement. From the results of measurement with ThruView, the degree of orientation was calculated using the half-width Wh of the orientation peak at a diffraction angle 2θ = 15.3° according to the following formula: the degree of orientation = (180 - Wh)/180 × 100. From the viewpoint of improving the refractive index in the stretching direction, the degree of orientation is preferably 94.5% or more because the crystallinity due to molecular orientation thus increases.

### (g) Crystal Size

A film after stretching was subjected to WAXD (wide-angle X-ray diffraction) measurement. From the results of measurement with ThruView, the crystal size was calculated from the peak at a diffraction angle 2θ = 15.3° using the following Scherrer equation. From the viewpoint of uniformly improving the refractive index, the crystal size is preferably 6 nm or less because the scattering of light is thus suppressed. Scherrer equation: $D = KΛ / BCosθ$
D: Crystal size
K: Scherrer constant (0.94)
λ: X-ray wavelength (154.2 nm)
B: Full width at half maximum
θ: Bragg angle

### [Example 1]

One hundred parts of 2,6-naphthalenedicarboxylic acid dimethyl ester (hereinafter abbreviated as NDC) and 51 parts of ethylene glycol (hereinafter abbreviated as EG) were charged into a reaction tank, and manganese acetate tetrahydrate in a total amount of 30 mmol% with respect to the number of moles of NDC was used as a transesterification catalyst to initiate a transesterification reaction. After a lapse of 20 minutes from the start of the transesterification reaction and the onset of methanol distillation, antimony trioxide, which serves as a polymerization catalyst, was added in a total amount of 20 mmol% with respect to the number of moles of NDC, and the transesterification reaction was continued. Subsequently, after about 1 hour, phenylphosphonic acid in a total amount of 40 mmol% (260 ppm) with respect to the number of moles of NDC was added to terminate the transesterification reaction. Next, a polycondensation reaction was subsequently carried out under high temperature and high vacuum, and then the polymer was extracted from the reaction tank and formed into chips.

The obtained polyethylene-2,6-naphthalate composition was subjected to film formation to obtain an unstretched sheet. The intrinsic viscosity of the obtained unstretched sheet was 0.55 dL/g. Subsequently, stretching was performed to obtain a stretched film. The refractive index of the obtained stretched film was measured, and the result is shown in Table 1.

### [Example 2]

Chips were produced in the same manner as in Example 1, except that HCA (9,10-dihydro-9-oxa-10-phosphaphenanthrene-10-oxide represented by the following chemical formula) was added in a total amount of 150 mmol% (1268 ppm) with respect to the number of moles of NDC instead of phenylphosphonic acid, and an unstretched sheet was obtained by film formation. The intrinsic viscosity of the obtained unstretched sheet was 0.60 dL/g. Subsequently, stretching was performed to obtain a stretched film. The refractive index of the obtained stretched film was measured, and the result is shown in Table 1.

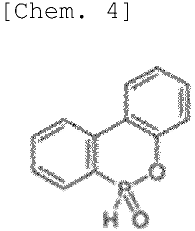

### [Comparative Example 1]

Chips were produced in the same manner as in Example 1, except that 40 mmol% of phenylphosphonic acid was changed to 50 mmol% (200 ppm) of orthophosphoric acid, and an unstretched sheet was obtained by film formation. The intrinsic viscosity of the obtained unstretched sheet was 0.51 dL/g. Subsequently, stretching was performed to obtain a stretched film. The refractive index of the obtained stretched film was measured, and the result is shown in Table 1.

### [Comparative Example 2]

Chips were produced in the same manner as in Comparative Example 1, except that TPP (triphenyl phosphate represented by the following chemical formula) was added in a total amount of 500 mmol% (4536 ppm) with respect to the number of moles of NDC instead of orthophosphoric acid, and an unstretched sheet was obtained by film formation. The intrinsic viscosity of the obtained unstretched sheet was 0.58 dL/g. Subsequently, stretching was performed to obtain a stretched film. The refractive index of the obtained stretched film was measured, and the result is shown in Table 1.

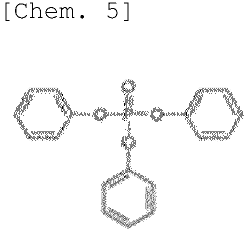

### [Table 1]

**Table 1**

| | | Example 1 | Example 2 | Comparative Example 1 | Comparative Example 2 |
|---|---|---|---|---|---|
| Phosphorus Compound | | Phenylphosphonic Acid | HCA | Orthophosphoric Acid | TPP |
| Amount of Phosphorus Compound Added | mmol% | 40 | 150 | 50 | 500 |
| Intrinsic Viscosity of Unstretched Sheet | dL/g | 0.55 | 0.60 | 0.51 | 0.58 |
| Tg of Unstretched Sheet | °C | 116 | 116 | 110 | 107 |
| Stretching Temperature | °C | 140 | 140 | 140 | 140 |
| Stretching Speed | m/min | 2.1 | 2.1 | 2.1 | 2.1 |
| Draw Ratio | times | 4.9 | 5.0 | 5.0 | 5.9 |
| Refractive Index in Stretching Direction (Nx) | | 1.85 | 1.85 | 1.83 | 1.83 |
| Birefringence (Nx - Ny) | | 0.23 | 0.23 | 0.21 | 0.21 |
| Degree of Orientation | % | 94.6 | 94.7 | 94.7 | 94.3 |
| Crystal size | nm | 5.6 | 5.8 | 6.2 | 6.5 |

## Claims

1. A polyethylene naphthalate resin composition for an optical member, comprising:
(A) polyethylene naphthalate; and
(B) a phosphorus compound represented by the following formula (I) or (II) or a salt thereof: 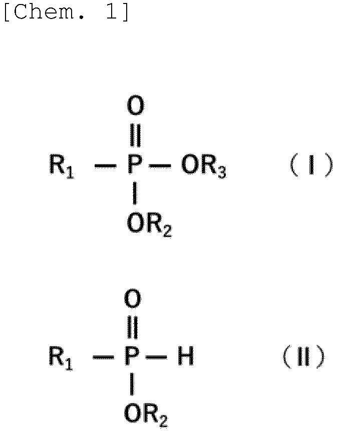 wherein R₁ represents an alkyl group having 1 to 12 carbon atoms, an aryl group having 6 to 12 carbon atoms, or a benzyl group, R₂ and R₃ each represent an alkyl group having 1 to 12 carbon atoms, an aryl group having 6 to 12 carbon atoms, a benzyl group, an ethylene glycol group, or a hydrogen atom, and R₁ and R₂ may be bonded to each other to form a ring.

2. The resin composition according to claim 1, wherein the amount of the phosphorus compound or salt thereof added is 0.1 to 10000 ppm.

3. The resin composition according to claim 1, wherein the phosphorus compound or salt thereof is phenylphosphonic acid or a salt thereof, or 9,10-dihydro-9-oxa-10-phosphaphenanthrene-10-oxide or a salt thereof.

4. The resin composition according to claim 1, wherein
the salt is at least one selected from a manganese salt, a cobalt salt, and a zinc salt, and/or
the resin composition contains at least one selected from a manganese ion, a cobalt ion, and a zinc ion.

5. The resin composition according to claim 1, wherein a sheet obtained by stretching a sheet of the resin composition at a uniaxial maximum draw ratio has a higher refractive index in the stretching direction than a sheet obtained by stretching, under the same conditions at a uniaxial maximum draw ratio, a sheet of a resin composition to which the phosphorus compound or salt thereof is not added.

6. A uniaxially stretched film comprising the resin composition according to claim 1.

7. The uniaxially stretched film according to claim 5, having a refractive index of 1.80 to 1.95 in the stretching direction.

8. The uniaxially stretched film according to claim 5, having a degree of orientation of 94.5% or more and a crystal size of 6 nm or less.
